# EUROPEAN PATENT APPLICATION

(11) **EP 3 407 268 A1**
(43) Date of publication of application: **28.11.2018**
(21) Application number: 16885905.6
(22) Date of filing: 01.04.2016
(51) Int. Cl.: G06N 3/08

(54) **DEVICE AND METHOD FOR EXECUTING REVERSAL TRAINING OF ARTIFICIAL NEURAL NETWORK**

(30) Priority: 20.01.2016 CN 201610039032
(71) Applicant: Cambricon Technologies Corporation Limited, Beijing 100190 (CN)
(72) Inventor: LIU, Shaoli, Beijing 100190 (CN); GUO, Qi, Beijing 100190 (CN); CHEN, Yunji, Beijing 100190 (CN); CHEN, Tianshi, Beijing 100190 (CN)
(74) Representative: AWA Sweden AB
(86) International application number: PCT/CN2016/078279
(87) International publication number: WO 2017/124641

(57) **Abstract**

An apparatus for executing backwards training of an artificial neural network comprises an instruction caching unit 1, a controller unit 2, a direct memory access unit 3, an H tree module 4, a master computation module 5, and multiple slave computation modules 6. By using the apparatus, backwards training of a multiple-layer artificial neural network can be implemented. For each layer, firstly, weighted summation is performed on input gradient vectors to calculate an output gradient vector of this layer. The output gradient vector is multiplied by a derivative value of a next-layer activation function on which forward operation is performed, so that a next-layer input gradient vector can be obtained. The input gradient vector is multiplied by an input neuron counterpoint in forward operation to obtain the gradient of a weight value of this layer, and the weight value of this layer can be updated according to the gradient of the obtained weight value of this layer.

## Description

### TECHNICAL FIELD

The present disclosure generally relates to the technical field of artificial neural network, and specifically, relates to an apparatus and method for executing the backwards training of the artificial neural network.

### BACKGROUND

Multiple-layer artificial neural networks are widely applied to the fields such as pattern recognition, image processing, functional approximation and optimal computation. In recent years, due to the higher recognition accuracy and better parallelizability, multiple-layer artificial neural networks have received increasing attention by academic and industrial communities.

A known method to support the backwards training of a multiple-layer artificial neural network is to use a general-purpose processor. Such a method uses a general purpose register file and a general purpose functional unit to execute general purpose instructions to support the aforementioned algorithm. However, one of the defects of the method is lower operational performance of a single general purpose processor which cannot meet performance requirements for usual multiple-layer neural network operations. When multiple general purpose processors execute concurrently, the intercommunication among them also becomes a performance bottleneck. In addition, a general purpose processor needs to decode the reverse computation of a multiple-layer artificial neural network into a long queue of computations and access instruction sequences, and a front-end decoding on the processor brings about higher power consumption.

Another known method to support the backwards training of the multiple-layer artificial neural network is to use a graphics processing unit (GPU). Such a method uses a general purpose register file and a general purpose stream processing unit to execute general purpose SIMD instructions to support the aforementioned algorithm. Since GPU is an apparatus specially for executing graph and image operation as well as scientific computation, and fails to specially support multiple-layer artificial neural network operations, the GPU remains in need of a great amount of front-end decoding to execute multiple-layer artificial neural network operations, thus producing plenty of additional overheads. Besides, since GPU only contains rather small on-chip caching, then model data (weight values) of a multiple-layer artificial neural network has to be repeatedly moved from the off-chip, and off-chip bandwidth becomes a main performance bottleneck, causing huge power consumption.

### SUMMARY

One aspect of the present disclosure provides an apparatus for executing backwards training of an artificial neural network, comprising an instruction caching unit, a controller unit, a direct memory access unit, an H tree module, a master computation module, and multiple slave computation modules, wherein the instruction caching unit is for caching instructions, the controller unit is for reading instructions from the instruction caching unit and decoding such instructions into micro instructions controlling operations of the H tree module, the master computation module and slave computation modules, the direct memory access unit for writing data from the memory into data caching units corresponding to the master computation module and each slave computation module, or reading data to the memory from said data caching units; for the H tree module, in the stage of starting computation of backwards training of each layer neural network, the master computation module transmits an input gradient vector of this layer to all slave computation modules through the H tree module, and after completion of computation process in slave computation modules, the H tree module step-by-step adds together each two of partial sums of output gradient vectors of each computation module to calculate an output gradient vector of this layer, the master computation module for using an output gradient vector of this layer to complete a subsequent computation in computation of each layer, and each slave computation module using the same input gradient vectors and their respective weight value data to concurrently calculate partial sums of corresponding output gradient vectors.

Another aspect of the present disclosure provides a method for executing backwards training of a single-layer artificial neural network by using the aforementioned apparatus.

Another aspect of the present disclosure provides a method for executing backwards training of a multiple-layer artificial neural network by using the aforementioned apparatus.

### BRIEF DESCRIPTION OF THE DRAWINGS

To perfectly understand the present disclosure and the advantages thereof, the present disclosure is described as below with reference to the drawings:
Fig. 1 is an exemplary block diagram of an overall structure of an apparatus for executing backwards training of the artificial neural network according to examples of the present disclosure;
Fig. 2 schematically shows a structure of an H tree module of an apparatus for executing backwards training of the artificial neural network according to examples of the present disclosure;
Fig. 3 is an exemplary block diagram of a structure of a master computation module of an apparatus for executing backwards training of the artificial neural network according to examples of the present disclosure;
Fig. 4 is an exemplary block diagram of a structure of a slave computation module of an apparatus for executing backwards training of the artificial neural network according to examples of the present disclosure;
Fig. 5 is an exemplary block diagram of a process of backwards training of the artificial neural network according to examples of the present disclosure;
Fig. 6 is a flowchart illustrating a process of a single-layer artificial neural network computation according to examples of the present disclosure.

In the drawings, the same apparatus, part and unit are marked by the same reference signs.

### EXAMPLES

According to the following descriptions of exemplary embodiments of the present disclosure, those skilled in the art can easily obtain a general picture of the advantages and outstanding features of the present disclosure with reference to the accompanying drawings.

In the present disclosure, terms like "comprise", "include" and their own derivatives means comprisal, rather than restriction; and term "or" is inclusive, with a meaning of "and/or".

In the specification, various examples as below for describing the principle of the present disclosure are merely used for explanation, which should not be interpreted by any means to limit the protection scope thereof. Reference to the following descriptions of the accompanying drawings is used to help fully comprehend the exemplary embodiments of the present disclosure that are limited by claims and equivalents thereof. To be helpful for understanding, the following description comprises multiple particulars that should be considered as merely exemplary though. Thus, a person skilled in the art can make various changes to and modify the present disclosure without departing from the scope thereof. Besides, for the sake of clarity and briefness, descriptions of those commonly known functions and structures are omitted. Furthermore, throughout all the drawings, the same reference numbers are used for marking the similar functions and operations.

A backwards training of a multiple-layer artificial neural network according to examples of the present disclosure comprises two or more layers of multiple neurons. For each layer, firstly, a weighted summation operation is performed on an input gradient vector to calculate an output gradient vector of this layer. The output gradient vector is multiplied by a derivative value of an activation function of a next layer in a forward operation, so that the input gradient vector for the next layer can be obtained. The input gradient vector is contrapuntally multiplied by an input neuron in the forward operation to obtain a gradient of weight values of this layer, and the weight value of this layer can be updated according to the obtained gradient of the weight values of this layer.

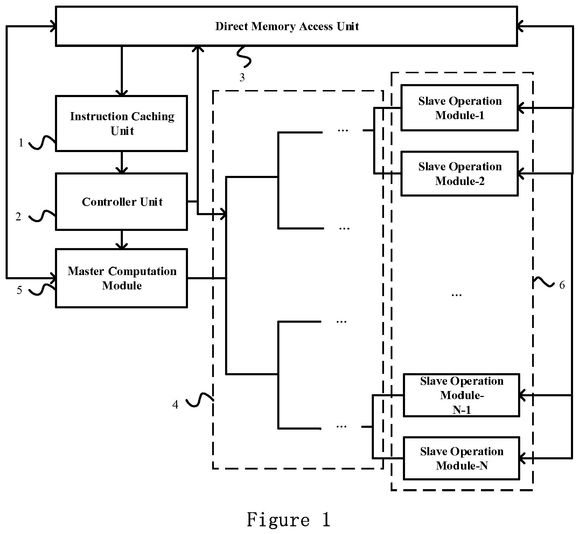

Fig. 1 is an exemplary block diagram of an overall structure of an apparatus for executing the backwards training of the artificial neural network according to examples of the present disclosure. As shown in Fig. 1, the apparatus comprises an instruction caching unit 1, a controller unit 2, a direct memory access unit 3, a H tree module 4, a master computation module 5, and multiple slave computation modules 6, all of which may be implemented by a hardware circuit (e.g. application specific integrated circuit (ASIC)).

The instruction caching unit 1 reads in an instruction through the direct memory access unit 3 and caches the instructions that are read in.

The controller unit 2 reads an instruction from the instruction caching unit 1, and transcodes the instruction into micro instructions for controlling other modules' operations, wherein said other modules can be, for example, the direct memory access unit 3, the master computation module 5, and the slave computation modules 6.

The direct memory access unit 3 can access an external address space, directly read and write data from and in each caching unit within the apparatus, and implements loading and storing data.

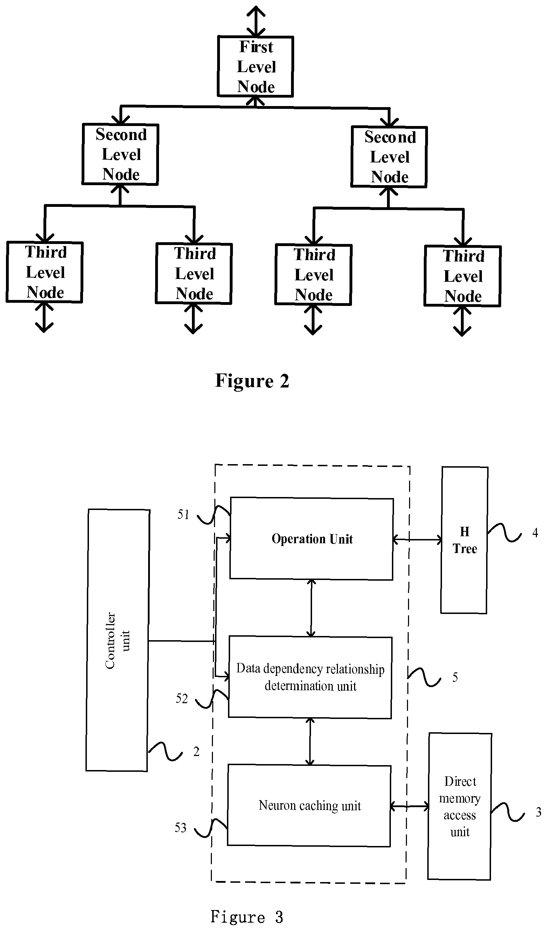

Fig. 2 schematically shows a structure of the H tree module 4 which constitutes a data channel between the master computation module 5 and the multiple slave computation modules 6 and has an H-tree structure. Further, the H-tree is a binary tree channel constituted with multiple nodes. Each node sends the upstream data to two downstream nodes, merges data returned from the two downstream nodes, and returns to the upstream nodes. For example, during the backwards computation of the neural network, vectors returned from the two downstream nodes will be added into one vector at the current node, which will be returned to the upstream nodes. In the stage where the artificial neural network of each layer starts computation, an input gradient in the master computation module 5, through the H tree module 4, is sent to the respective slave computation modules 6; after the slave computation modules 6 complete computation process, partial sums of output gradient vectors output by each slave computation module 6 are added together in the H tree module 4 stage-by-stage, i.e. performing summation on partial sums of all output gradient vectors, with the result serving as a final output gradient vector.

Fig. 3 is an exemplary block diagram of a structure of the master computation module 5 of the apparatus for executing the backwards training of the artificial neural network according to examples of the present disclosure. As shown in Fig. 3, the master computation module 5 comprises an operation unit 51, a data dependency relationship determination unit 52, and a neuron caching unit 53.

The neuron caching unit 53 is used for caching the input data and output data that the master computation module 5 may use in the computation process. The operation unit 51 performs various computation functions in the master computation module. And the data dependency relationship determination unit 52 is the port where the operation unit 51 reads and writes the neuron caching unit 53, and also can ensure there is no conflict in consistency for the reading and writing of the data in the neuron caching unit 53. Specifically, the data dependency relationship determination unit 52 determines whether there is a dependency relationship in terms of data between a micro instruction which has not been executed and a micro instruction being executed: if not, the micro instruction is allowed to be launched immediately; otherwise, the micro instruction is not allowed to be launched until all micro instructions on which it depends have been executed completely. For example, all micro instructions sent to the data dependency relationship determination unit 52 will be stored in an instruction queue within the data dependency relationship determination unit 52, and in the instruction queue, if the range of reading data by a reading instruction conflicts with the range of writing data by a writing instruction in the front of the queue, then such reading instruction cannot be executed until the writing instruction on which the such instruction depends is executed. Also, the data dependency relationship determination unit 52 reads an input gradient vector from the neuron caching unit 53 and then sending the same to the slave computation modules 6 through the H tree module 4, and the output data from the slave computation modules 6 is directly sent to the operation unit 51 through the H tree module 4. Instructions output by the controller unit 2 are sent to the operation unit 51 and the data dependency relationship determination unit 52 so as to control the operations thereof.

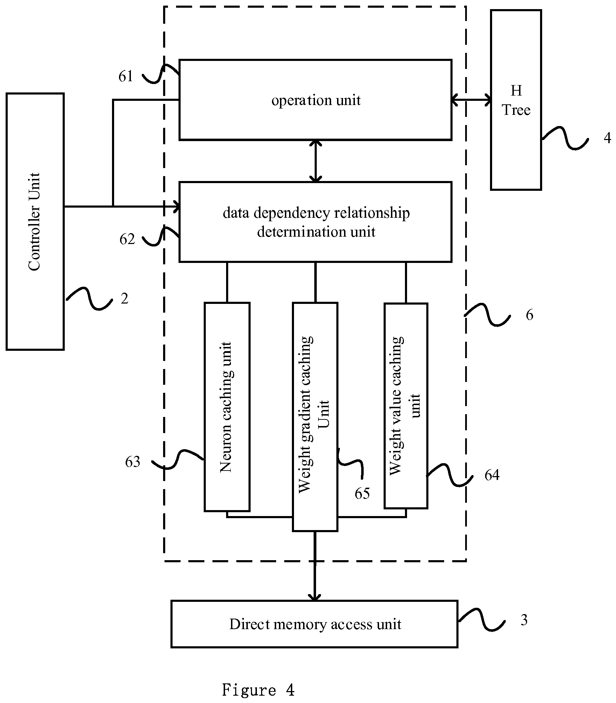

Fig. 4 is an exemplary block diagram of a structure of the slave computation modules 6 of the apparatus for executing the backwards training of artificial neural networks according to examples of the present disclosure. As shown in Fig. 4, each slave computation module 6 comprises an operation unit 61, a data dependency relationship determination unit 62, a neuron caching unit 63, a weight value caching unit 64 and a weight gradient caching unit 65.

The operation unit 61 receives micro instructions sent from the controller unit 2, and performs arithmetical logic computations.

The data dependency relationship determination unit 62 performs the read/write operations on the caching unit in the computation process. The data dependency relationship determination unit 62 ensures there is no conflict in consistency for the reading and writing of the data in the caching unit. Specifically, the data dependency relationship determination unit 62 determines whether there is dependency relationship in terms of data between a micro instruction which has not been executed and a micro instruction being executed: if not, the micro instruction is allowed to be launched immediately; otherwise, the micro instruction is not allowed to be launched until all micro instructions on which it depends have been executed completely. For example, all micro instructions sent to the data dependency relationship determination unit 62 will be stored in an instruction queue within the data dependency relationship determination unit 62, and in the queue, if the range of reading data by a reading instruction conflicts with the range of writing data by a writing instruction in the front of the queue, then such instruction cannot be executed until the writing instruction on which the such instruction depends is executed.

The neuron caching unit 63 caches the input gradient vector data and partial sums of output gradient vectors calculated by the slave computation modules 6.

The weight value caching unit 64 caches weight vectors as required by such slave computation modules 6 in computation process. For each slave computation module, only a column in a weight matrix corresponding to such slave computation module 6 is stored.

The weight gradient caching unit 65 caches weight gradient data as required by the corresponding slave computation modules in the process of updating weight values. Weight gradient data stored by each slave computation module 6 is corresponding to a weight vector it stores.

The slave computation modules 6 implements a parallelizable first-half part of the backwards training of artificial neural network of each layer during the computation of the output gradient vector, and implements weight value updating. Taking the artificial neural network full connection layer (MLP) as an example, the process is out gradient = w*in_gradient, wherein the multiplication between the weight matrix w and the input gradient vector in gradient may be divided as unrelated parallel computing subtasks; out_gradient and in_gradient are column vectors; each slave computation module only calculates a multiplication between the corresponding partial scalar elements in in_gradient and a corresponding column in the weight matrix w; each obtained output vector is a partial sum to be aggregated for a final result; and these partial sums are added together stage-by-stage in pairs in the H tree, thereby acquiring the final result. Thus, the computation process includes a parallel process of partial sum computation and a later process of aggregation. Each slave computation module 6 calculates partial sums of the output gradient vectors, and then a summation operation is performed on all partial sums in the H tree module 4, thereby acquiring a final output gradient vector. Each slave computation module 6 meanwhile multiplies an input gradient vector by an output value of each layer in forward operation to obtain the gradient of a weight value so as to update the weight value stored in the present slave computation module 6. Forward operation and backwards training are two main processes in neural network algorithm. When neural network trains (updates) weight values in the network, it needs to first calculate a forward output of an input vector in the network formed with current weight values, which is a forward process, and then layer-by-layer reversely train (update) weight values of each layer according to the difference between an output value and an annotated value of the input vector. In the forward operation, output vectors of each layer and derivative values of the activation function are stored, and such data are demanded in the backwards training, so such data is already ensured to exist at the beginning of the backwards training. The output data of each layer in the forward computation is existing data when the backwards training starts, and can cached in the master computation module through the direct memory access unit, and sent to the slave computation modules through the H tree. The master computation module 5 performs subsequent computations based on the output gradient vectors. For example, an output gradient vector is multiplied by the derivative of the activation function in the forward operation, so that an input gradient value for a next layer can be obtained. The derivatives of the activation function in the forward operation are existing data at the time of starting backwards computation, which can be cached in the master computation module through the direct memory access unit.

According to one embodiment of the present disclosure, it further provides an instruction set executing the forward operation of the artificial neural network in the aforementioned apparatus. The instruction set comprises a CONFIG instruction, a COMPUTE instruction, an IO instruction, an NOP instruction, a JUMP instruction, and a MOVE instruction, wherein:

The CONFIG instruction configures various constants required by computation of the current layers prior to starting computation of the artificial neural network of each layer;

The COMPUTE instruction completes arithmetical logic computation of the artificial neural network of each layer;

The IO instruction reads in the input data required by computation from an external address space, and storing the data back into the external space after completion of computation;

The NOP instruction is used for emptying all micro instructions currently loaded in the micro instruction caching queue within the apparatus and ensures completion of all instructions prior to the NOP instruction. The NOP instruction itself does not comprise any operations.

The JUMP instruction is used for a jump of the address of a next instruction to be read by the controller from the instruction caching unit, in order to implement a jump of the control flow;

The MOVE instruction is used for carrying data at a certain address in an internal address space of the apparatus to another address of the internal address space of the apparatus. This process is independent from the operation unit and thus will not occupy resources of the operation unit when executed.

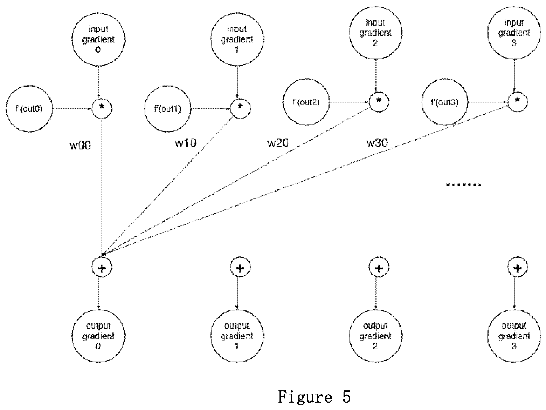

Fig. 5 is an exemplary block diagram of a process of executing the backwards training of the artificial neural network according to examples of the present disclosure. The process of calculating the output gradient vector is out_gradient = w * in_gradient, wherein the matrix vector multiplication between the weight matrix w and the input gradient vector in_gradient may be divided into unrelated parallel computing subtasks; each slave computation module 6 calculates a partial sum of the output gradient vector; and a summation operation is performed on all the partial sums in the H tree module 4, thereby acquiring the final output gradient vector. The output gradient vector input gradient of an upper layer in Fig. 5 is multiplied by a derivative of a corresponding activation function to obtain the input data of the present layer, subsequently being multiplied by the weight matrix to obtain the output gradient vector. The process of calculating the updating gradient of the weight values is dw = x * in_gradient, wherein each slave computation module 6 calculates an updating gradient of a weight value of the corresponding part of the present module. The slave computation modules 6 calculate an updating gradient dw of the weight values by multiplying the input gradient by an input neuron in the forward operation, and then updates the weight value w by using w, dw and the updating gradient dw' of the weight values used in the previous updating of weight values according to a learning rate set by instruction.

With reference to Fig. 5, input gradient ([input gradient0,..., input gradient3] in Fig. 5) is the output gradient vector of the (n+1)^{th} layer, this vector is first multiplied by a derivative value ([f'(out0),...,f'(out3)] in Fig. 5) of the n^{th} layer in the forward operation to obtain the input gradient vector of the n^{th} layer, the process of which is completed in the master computation module 5; and the input gradient vector of the n^{th} layer is sent by the H tree module 4 to the slave computation modules 6, and temporarily stored in the neuron caching unit 63 of the slave computation modules 6. Then, the input gradient vector is multiplied by the weight matrix to obtain the output gradient vector of the n^{th} layer. In the process, the i^{th} slave computation module calculates a product between the i^{th} scalar of the input gradient vector and a column vector [w_i0,...,w_iN] in the weight matrix, and the obtained output vectors are stage-by-stage added together in pairs in the H tree module 4, thereby obtaining the final output gradient vector output gradient ([output gradient0,..., output gradient3] in Fig. 5).

Meanwhile, the slave computation modules 6 further need to update weight values stored in the present module, and the process of calculating the updating gradient of the weight values is dw ij = x_j * in_gradient_i, wherein x_j is the j^{th} element of the input (i.e. the output of the (n-1)^{th} layer) vector of the n^{th} layer in the forward operation, and in_gradient_i is the i^{th} element of the input gradient vector (i.e. the product of input gradient and derivative f' in Fig. 5) of the n^{th} layer in the backwards computation. The inputs of the n^{th} layer in forward operation are data that already exist at the beginning of the backwards training and are sent to the slave computation modules 6 through the H tree module 4 and temporarily stored in the neuron caching unit 63. In the slave computation modules 6, after completion of calculating partial sums of the output gradient vector, the i^{th} scalar of the input gradient vector is multiplied by the input vector of the n^{th} layer in the forward operation so as to obtain an updating gradient vector of the weight value dw, and to update the weight value according to it.

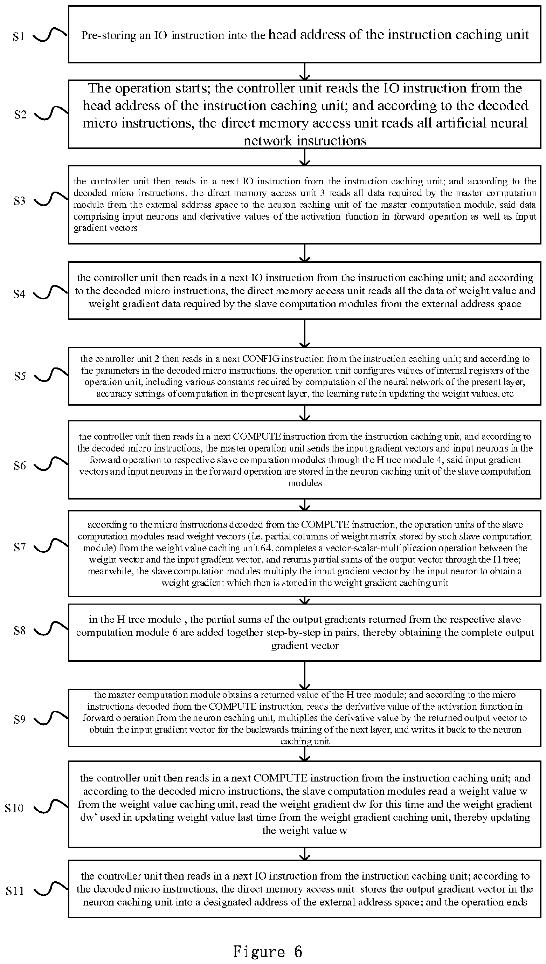

Fig. 6 is a flowchart of the backwards training of a single-layer artificial neural network according to one example. The flowchart illustrates a process of implementing the backwards training of the single-layer neural network as shown in Fig. 5 by using an apparatus and an instruction set of the present disclosure.

In Step S1, an IO instruction is pre-stored into the head address of the instruction caching unit 1.

In Step S2, the operation starts. The controller unit 2 reads the IO instruction from the head address of the instruction caching unit 1; and according to the decoded micro instructions, the direct memory access unit 3 reads all instructions associated with the backwards training of the single-layer artificial neural network from the external address space, and then caches them in the instruction caching unit 1.

In Step S3, the controller unit 2 then reads in a next IO instruction from the instruction caching unit; and according to the decoded micro instructions, the direct memory access unit 3 reads all data required by the master computation module 5 from the external address space to the neuron caching unit 53 of the master computation module 5, said data comprising input neurons and derivative values of the activation function in forward operation as well as input gradient vectors.

In Step S4, the controller unit 2 then reads in a next IO instruction from the instruction caching unit; and according to the decoded micro instructions, the direct memory access unit 3 reads all the data of weight value and weight gradient data required by the slave computation modules 6 from the external address space, and stores them in the corresponding weight value caching unit 64 and the corresponding weight gradient caching unit 65 of the slave computation modules 6, respectively.

In Step S5, the controller unit 2 then reads in a next CONFIG instruction from the instruction caching unit; and according to the parameters in the decoded micro instructions, the operation unit configures values of internal registers of the operation unit, including various constants required by computation of the neural network of the present layer, accuracy settings of computation in the present layer, the learning rate in updating the weight values, etc.

In Step S6, the controller unit 2 then reads in a next COMPUTE instruction from the instruction caching unit, and according to the decoded micro instructions, the master operation unit 5 sends the input gradient vectors and input neurons in the forward operation to respective slave computation modules 6 through the H tree module 4, said input gradient vectors and input neurons in the forward operation are stored in the neuron caching unit 63 of the slave computation modules 6.

In Step S7, according to the micro instructions decoded from the COMPUTE instruction, the operation units 61 of the slave computation modules 6 read weight vectors (i.e. partial columns of weight matrix stored by such slave computation module) from the weight value caching unit 64, completes a vector-scalar-multiplication operation between the weight vector and the input gradient vector, and returns partial sums of the output vector through the H tree; meanwhile, the slave computation modules 6 multiply the input gradient vector by the input neuron to obtain a weight gradient which then is stored in the weight gradient caching unit 65.

In Step S8, in the H tree module 4, the partial sums of the output gradients returned from the respective slave computation module 6 are added together step-by-step in pairs, thereby obtaining the complete output gradient vector.

In Step S9, the master computation module 5 obtains a returned value of the H tree module 4; and according to the micro instructions decoded from the COMPUTE instruction, reads the derivative value of the activation function in forward operation from the neuron caching unit 53, multiplies the derivative value by the returned output vector to obtain the input gradient vector for the backwards training of the next layer, and writes it back to the neuron caching unit 53.

In Step S10, the controller unit 2 then reads in a next COMPUTE instruction from the instruction caching unit; and according to the decoded micro instructions, the slave computation modules 6 read a weight value w from the weight value caching unit 64, read the weight gradient dw for this time and the weight gradient dw' used in updating weight value last time from the weight gradient caching unit, thereby updating the weight value w.

In Step S11, the controller unit then reads in a next IO instruction from the instruction caching unit; according to the decoded micro instructions, the direct memory access unit 3 stores the output gradient vector in the neuron caching unit 53 into a designated address of the external address space; and the operation ends.

As for a multiple-layer artificial neural network, the implementation procedures thereof are similar to those of the single-layer artificial neural network. After the artificial neural network of the previous layer is done with execution, computation instructions of the next layer may take the output gradient vector calculated in the master computation module as the input gradient vector for the training of the next layer, so as to perform the computation process as above, wherein the weight address and weight gradient address in the instructions may also be changed to addresses corresponding to this layer.

By adopting the apparatus and instruction set for executing the backwards training of the artificial neural network, problems such as insufficient operational performance of CPU and GPU, and large overhead for front-end decoding have been solved, while the support for the forward operation of the multiple-layer artificial neural network has been effectively enhanced.

By adopting specialized on-chip cache directed to the backwards training of the multiple-layer artificial neural network, reusability of the input neuron and weight data has been fully explored, while repeated reading of such data from memory has been avoided, memory access bandwidth has been reduced, and problem that memory bandwidth becomes a performance bottleneck of the forward operation of reusability multiple-layer artificial neural network has been averted.

The process and method as depicted in the foregoing drawings may be executed through processing logics including hardware (e.g. circuit, special logic, etc.), firmware, software (e.g. a software embodied in a non-transient computer readable medium), or combination of each two. Although the above describes the process or method in light of certain sequential operation, it should be understood that certain operation described herein may be executed in different orders. Additionally, some operations may be executed concurrently rather than sequentially.

In the above of the specification, examples of the present disclosure are expounded with reference to specific exemplary embodiments thereof. A person skilled in the art can make various changes to and modify the present disclosure without departing from the scope thereof. Correspondingly, the specification and accompanying drawings should be deemed as illustrative, rather than restrictive.

## Claims

1. An apparatus for executing backwards training of an artificial neural network, the apparatus comprising an instruction caching unit, a controller unit, a direct memory access unit, an H tree module, a master computation module, and multiple slave computation modules, wherein:
the instruction caching unit is configured to cache instructions;
the controller unit is configured to read instructions from the instruction caching unit and decoding the instructions into micro instructions controlling operations of the H tree module, the master computation module and slave computation modules;
the direct memory access unit is configured to write data into corresponding data caching units of the master computation module and the respective slave computation modules from an external address space or read data from the data caching units to the external address space;
the H tree module is configured to achieve the following: in the initial computing stage of the backwards training of neural networks of each layer, the master computation module transmits an input gradient vector of this layer to all slave computation modules through the H tree module, and after completion of computation process in slave computation modules, the H tree module step-by-step adds partial sums of output gradient vectors of the respective slave computation modules together in pairs to calculate an output gradient vector of this layer;
the master computation module is configured to use the output gradient vector of this layer to complete subsequent computation during computation of each layer; and
each of the slave computation modules is configured to use the same input gradient vector and their respective weight value data to parallel-compute partial sums of the respective output gradient vectors.

2. The apparatus of claim 1, wherein the multiple slave computation modules use the same input gradient vector to parallel-compute their respective gradients of weight values and uses the obtained gradients of weight values to update their respective weight values.

3. The apparatus of claim 1, wherein the master computation module performs a contrapuntal multiplication operation on an output gradient vector of each layer and a derivative value of an activation function of a next layer, the result of which is used as the input gradient vector of the next layer.

4. The apparatus of claim 1, wherein the slave computation modules comprise an input neuron caching unit configured to cache an input neuron data.

5. The apparatus of claim 1, wherein the H tree module forms a data channel between the master computation module and the multiple slave computation modules, and has a structure of H tree, the H tree is a binary tree channel formed by multiple nodes, with each node transmitting the upstream data to two downstream nodes and adding data returned by the two downstream nodes together and transmitting the result back to the upstream node.

6. The apparatus of claim 1, wherein the master computation module comprises an operation unit, a data dependency relationship determination unit and a neuron caching unit,
the neuron caching unit is configured to cache input data and output data used by the master computation module in the computing process;
the operation unit conducts various operation functionality of the master computation module;
the data dependency relationship determination unit is a port for the operation unit to read/write the neuron caching unit and ensures there is no consistency conflict in the data reading/writing of the neuron caching unit, reads the input gradient vector from the neuron caching unit, and transmits the input gradient vector to the slave computation modules via the H tree module; and
the output gradient vector from the H tree module is sent to the operation unit.

7. The apparatus of claim 1, wherein each slave computation module comprises an operation unit, a data dependency relationship determination unit, a neuron caching unit, a weight value caching unit and a weight gradient caching unit, wherein
the operation unit receives micro instructions transmitted from the controller unit and performs arithmetic logical operations;
the data dependency relationship determination unit is configured to perform the reading/writing operation to the neuron caching unit, the weight value caching unit and the weight gradient caching unit in the computing process, ensuring there is no consistency conflict in the reading/writing of the neuron caching unit, the weight value caching unit and the weight gradient caching unit;
the neuron caching unit caches the input gradient vector data and partial sums of the output gradient vector obtained from the computation of the slave computation modules; and
the weight value caching unit caches weight vectors needed by the slave computation modules in the computing process, and for each of the slave computation modules, the weight vector is a column in the weight matrix corresponding to the each of the slave computation modules;
the weight gradient caching unit caches weight gradient data needed by the respective slave computation modules in the process of updating the weight value, the weight gradient data stored by each of the slave computation modules corresponds to the weight vector that it stores.

8. The apparatus of claims 6 or 7, the following method is used to ensure there is no consistency conflict in the reading/writing: determining whether there is dependent relationship between the data of a micro-instruction which has not been executed and the data of the micro-instruction which is being executed, if there is no dependent relationship, allowing the micro-instruction which has not been executed to be launched immediately, otherwise, the micro-instruction which has not been executed will not be allowed to launch until the execution of all the micro-instructions upon which that micro-instruction which has not been executed depend is completed.

9. A method of performing backwards training of a single-layer artificial neural network by using the apparatus of any one of claims 1-7, the method comprising:
the direct memory access unit reads all the artificial neural network computation instructions relevant with the backwards training of the single-layer artificial neural network from an external address space, and caches the instructions in the instruction caching unit;
the direct memory access unit reads all data needed by the master computation module from the external address space into the neuron caching unit of the master computation module, the data comprising input gradient vectors, the derivative value of an activation function and input neurons in the previous forward computation;
the direct memory access unit reads all the weight data and weight gradient data needed by the slave operation modules from the external address space and stores into the weight value caching unit and weight gradient caching unit of the respective slave computation modules;
the respective operation units of the master computation module and the slave computation modules configure values of internal registers of the operation units according to the parameters in the decoded micro instructions, the parameters including various constants required by computation of the neural network of the that layer, accuracy settings of computation in the present layer, the learning rate in updating the weight values;
the master computation module transmits the input gradient vector and the input neurons in the forward computation to respective slave computation modules via the H tree module, and the input gradient vector and the input neurons in the forward computation are stored in the neuron caching unit of the slave computation module;
the operation units of the slave computation modules read a weight vector from the weight value caching unit and complete a vector-scalar-multiplication operation between the weight vector and the input gradient vector, and return partial sums of the output vector through the H tree module; meanwhile, the slave computation modules multiply the input gradient vector by the input neuron to obtain a weight gradient which then is stored in the weight gradient caching unit, wherein the weight vector is a partial column of a weight matrix stored by the respective slave computation modules;
in the H tree module, the partial sums of the output gradients returned from the respective slave computation modules are added together step-by-step in pairs, thereby obtaining a complete output gradient vector.
the master computation module obtains a returned value of the H tree module; and reads the derivative value of the activation function in forward computation from the neuron caching unit, multiplies the derivative value by the returned output gradient vector to obtain the input gradient vector for the backwards training of the next layer, and writes it back to the neuron caching unit;
the slave computation modules read a weight value w from the weight value caching unit 64, read the weight gradient dw for this time and the weight gradient dw' used in updating the weight value last time from the weight gradient caching unit, thereby updating the weight value w;
the direct memory access unit stores the output gradient vector in the neuron caching unit into a designated address of the external address space.

10. A method of performing a backwards training of a multi-layer artificial neural network, the method comprising:
executing the method of claim 9 for each layer, wherein
when the execution for the artificial neural network of a previous layer is completed, using an input gradient vector for the training of a next layer computed in the master computation module, executing the method of claim 9 for the next layer.
